# FASCICULE DE BREVET EUROPEEN

(11) **EP 1 836 040 B1**
(45) Date de publication et mention de la délivrance du brevet: **10.06.2009**
(21) Numéro de dépôt: 05819312.9
(22) Date de dépôt: 08.11.2005
(51) Int. Cl.: B29C 51/22

(54) **PROCEDE ET DISPOSITIF DE FABRICATION DE RECIPIENTS PAR THERMOFORMAGE ET DE MISE EN PLACE DE BANDEROLES DE DECOR SUR CES RECIPIENTS**
VERFAHREN UND VORRICHTUNG ZUR HERSTELLUNG VON BEHÄLTNISSEN DURCH WÄRMEFORMEN UND ANORDNUNG VON ZIERSTREIFEN AUF DEN BEHÄLTNISSEN
METHOD AND APPARATUS FOR MANUFACTURING RECEPTACLES BY THERMOFORMING AND PLACEMENT OF DECORATIVE STRIPS ON SAID RECEPTACLES

(30) Priorité: 10.11.2004 FR 0411970; 06.07.2005 FR 0507189
(43) Date de publication de la demande: 26.09.2007
(73) Titulaire: Erca Formseal, 91940 Les Ulis (FR)
(72) Inventeur: GANDON, Bernard, F-78730 St Arnould en Yvelines (FR); DUNAN, Alain, F-91000 EVRY (FR); SCHWAB, Dominique, F-78000 Versailles (FR)
(74) Mandataire: Balesta, Pierre
(86) Numéro de dépôt international: PCT/FR2005/050934
(87) Numéro de publication internationale: WO 2006/051237

(56) Documents cités:
- EP-A- 0 296 302
- DE-A1- 10 348 182
- DE-U1-9202004 017 66
- FR-A- 2 308 484

## Description

La présente invention concerne un procédé de fabrication de récipients par thermoformage et de mise en place d'une banderole de décor sur ces récipients.

Selon ce procédé, on fournit un premier bloc de moule, qui comporte au moins une chambre de thermoformage et qui est apte à basculer entre une position de travail pour le thermoformage des récipients et une position basculée pour l'introduction d'une banderole dans la chambre de thermoformage, avant le thermoformage d'un récipient dans ladite chambre, voir les brevets EP 0 296 302, FR 2 308 484 et US 4 462 952.

Dans un procédé de ce type connu, on dispose d'une station de thermoformage et d'un bloc de moule constitué de deux demi-blocs de moule qui, pour la mise en place de banderoles de décor dans leurs chambres de thermoformage, sont aptes à basculer de manière simultanée, respectivement à droite et à gauche, entre une position de travail pour le thermoformage des récipients et une position basculée.

En l'espèce, on amène simultanément les deux demi-blocs de moule en position basculée, on introduit une banderole de décor dans chacune de leurs chambres de thermoformage, puis on redresse les deux demi-blocs de moule vers une position de travail en vue du thermoformage de récipients dans lesdites chambres de thermoformage.

Après la phase de thermoformage, on évacue les récipients venant d'être thermoformés avant d'amener à nouveau les deux demi-blocs de moule en position basculée afin d'introduire une nouvelle banderole de décor dans chacune de leurs chambres de thermoformage pour ensuite redresser ensemble les demi-blocs de moule vers leur position de travail, en vue du thermoformage suivant.

On comprend que pendant cette dernière étape, la station de thermoformage ne fonctionne pas car cette dernière est en attente de l'amenée du bloc de moule contenant de nouvelles banderoles, en position de travail.

Autrement dit, entre deux phases successives de thermoformage, il s'écoule une durée importante correspondant à la durée nécessaire pour évacuer un récipient venant d'être thermoformé, pour amener les deux demi-blocs de moule en position basculée, pour introduire les banderoles de décor dans les chambres de thermoformage de ces demi-blocs et pour les redresser en position de travail en vue du thermoformage suivant.

Cette durée correspond à un temps mort pour le fonctionnement de la station de thermoformage, mais aussi pour toute la chaîne de production disposée en aval de la station de thermoformage.

On comprend que ce temps mort a pour conséquence de nuire au rendement global de productivité des installations mettant en oeuvre ce procédé de fabrication.

L'invention se propose de remédier à ces inconvénients. La solution est fournie par les caractéristiques techniques des revendications indépendantes.

Ce but est atteint grâce au fait que, l'on fournit au moins un deuxième bloc de moule analogue au premier bloc de moule et que pendant que l'un desdits blocs de moule est en position de travail pour le thermoformage d'un récipient dans la chambre de thermoformage de ce bloc de moule, l'autre ou, le cas échéant, l'un des autres blocs de moule est en position basculée pour l'introduction d'une banderole dans sa chambre de thermoformage avant le thermoformage d'un autre récipient dans ladite chambre.

On entend par bloc de moule analogue au premier, un bloc de moule comprenant également au moins une chambre de thermoformage et qui est apte à basculer entre une position de travail pour le thermoformage des récipients et une position basculée pour l'introduction d'une banderole dans sa chambre de thermoformage.

On comprend que dans le procédé objet de l'invention, on profite de la durée de la phase de thermoformage d'un récipient dans une chambre de thermoformage de l'un des blocs de moule pour introduire au moins une banderole dans une chambre de thermoformage de l'autre bloc de moule, avant de thermoformer un autre récipient dans cette chambre.

On comprend alors que selon le présent procédé, le temps mort existant entre deux phases successives de thermoformage est réduit par rapport à celui existant dans le procédé connu car dès la fin du thermoformage d'un récipient dans une chambre de thermoformage de l'un des blocs de moule, on amène le bloc de moule préalablement muni de banderoles en position de travail en vue du thermoformage d'un autre récipient.

Autrement dit, par rapport au procédé connu, grâce au procédé de la présente invention, il est possible de thermoformer davantage de récipients dans un même laps de temps. Par conséquent, on améliore significativement le rendement de productivité de l'installation mettant en oeuvre le procédé objet de l'invention.

De préférence, si l'on a plus de deux blocs de moule, on introduit une banderole dans la chambre de thermoformage d'un bloc de moule en position basculée en choisissant pour ce bloc de moule celui qui doit venir en position de travail au pas suivant.

De préférence, on amène simultanément l'un des blocs de moule en position de travail et l'autre ou l'un des autres blocs de moule en position basculée, ce qui limite encore les pertes de temps.

De manière connue, une chambre de thermoformage est orientée selon une direction sensiblement horizontale lorsque son bloc de moule est en position basculée et elle est orientée selon une direction sensiblement verticale lorsque son bloc de moule est en position de travail.

On introduit une banderole de décor dans une chambre de thermoformage de l'un des blocs de moule en position basculée pendant le thermoformage d'un récipient dans une chambre de thermoformage de l'autre ou l'un des autres blocs de moule en position de travail.

Généralement, le thermoformage dure plus longtemps que la durée nécessaire pour introduire une banderole de décor dans une chambre de thermoformage. On profite donc avantageusement de la durée du thermoformage pour introduire une banderole de décor dans une chambre de thermoformage.

Après thermoformage d'un récipient dans une chambre de thermoformage de l'un des blocs de moule en position de travail, on évacue ledit récipient et on introduit une banderole de décor dans une chambre de thermoformage de l'autre ou de l'un des autres blocs de moule en position basculée pendant l'évacuation dudit récipient thermoformé.

Comme la durée nécessaire à l'évacuation du récipient est plus longue que celle nécessaire à l'introduction d'une banderole de décor dans une chambre de thermoformage, on profite avantageusement de la durée d'évacuation pour introduire une banderole de décor dans une chambre de thermoformage.

En général, l'évacuation comprend une phase de déplacement du moule pour le démoulage et une phase de déplacement du ou des récipients démoulés. C'est plutôt pendant cette deuxième phase que l'introduction d'une (de) banderole(s) se fait.

Dans sa position de travail, chaque bloc de moule est apte à occuper une position de thermoformage dans laquelle on thermoforme un récipient dans une chambre de thermoformage de ce bloc de moule et une position d'évacuation dans laquelle on évacue un récipient venant d'être thermoformé et on introduit une première banderole dans une première chambre de thermoformage d'un bloc moule en position basculée alors que l'autre ou l'un des autres blocs de moule est en position de thermoformage et on introduit une autre banderole de décor dans une autre chambre du bloc de moule en position basculée alors que l'autre ou l'un des autres blocs de moule est en position d'évacuation.

En déplaçant l'un des blocs de moule en position de travail entre sa position de thermoformage et sa position d'évacuation, on déplace simultanément l'autre bloc de moule entre une position basculée à un premier niveau et une position basculée à un deuxième niveau.

Avantageusement, on introduit au moins une série de banderoles de décor dans l'un des blocs de moule en position basculée au premier niveau alors que l'autre ou l'un des autres blocs de moule est en position de thermoformage et on introduit au moins une série de banderoles de décor dans le bloc de moule en position basculée au deuxième niveau alors que l'autre ou l'un des autres blocs de moule est en position d'évacuation.

Par « série de banderoles de décor » il faut entendre « au moins une banderole de décor », mais comme généralement chacun des blocs de moule comporte plusieurs chambres de thermoformage, « une série de banderoles de décor » correspond le plus souvent à plusieurs banderoles de décor utilisées simultanément lors d'un cycle de thermoformage.

Par ailleurs, les banderoles de décor présentent préférentiellement la forme d'un cylindre ouvert à ses extrémités.

On commence par introduire des banderoles dans des chambres de thermoformage d'un bloc de moule en position basculée alors qu'il est en position basculée au premier niveau, on déplace ce bloc de moule en position basculée au deuxième niveau puis on introduit d'autres banderoles dans d'autres chambres de thermoformage du bloc de moule.

On comprend que dans le cas particulier où l'on souhaite thermoformer simultanément quatre rangées de récipients, c'est-à-dire dans le cas où chaque bloc de moule comprend quatre rangées de chambres de thermoformage, il peut être difficile d'amener quatre bandelettes de décor jusqu'aux quatre niveaux de rangées de chambres d'un bloc de moule en position basculée, en raison de l'encombrement des moyens d'amenée des bandelettes de décor.

C'est pour cette raison que dans l'art antérieur, on dispose de deux demi-blocs de moule comportant chacun deux rangées de chambres de thermoformage, que l'on bascule simultanément vers deux côtés opposés afin d'introduire deux rangées de banderoles de décor à partir de chaque côté. Une fois redressés, les deux demi-blocs reconstituent le bloc de moule à quatre rangées.

Comme on le comprend, selon le présent procédé, il est avantageusement possible d'introduire quatre rangées de banderoles de décor à partir d'au moins un côté, car il suffit d'amener deux bandelettes de décor jusqu'à deux niveaux de rangées de chambres d'un bloc de moule en position basculée et de déplacer ce bloc de moule en position basculée entre le premier et le deuxième niveau en introduisant deux rangées de banderoles de décor à chaque niveau.

Dès lors, le présent procédé permet en particulier d'introduire quatre rangées de banderoles de décor à l'aide de deux rangées de chambres d'introduction disposées d'un seul côté du bloc de moule.

En ce cas, un intérêt est de laisser l'autre côté du bloc de moule accessible pour les opérations de maintenance.

De manière préférentielle, l'introduction d'une série de banderoles est réalisée dans un plan horizontal, c'est-à-dire latéralement par rapport au bloc de moule.

Selon un premier mode de mise en oeuvre, on fournit un unique deuxième bloc de moule et on bascule l'un des blocs de moule dans un premier sens et l'autre bloc de moule dans l'autre sens, de telle manière qu'en position basculée, l'introduction de banderoles dans l'un des blocs de moule se fait à partir d'un premier côté et l'introduction de banderoles dans l'autre bloc de moule se fait à partir du côté opposé au premier côté.

Selon un deuxième mode de mise en oeuvre, on fournit une triade de deuxièmes blocs de moule et on bascule les deuxièmes blocs de moule dans un même sens, de telle sorte qu'en position basculée, l'introduction de banderoles de décor se fait à partir d'un unique côté.

L'invention concerne également un dispositif pour fabriquer par thermoformage des récipients munis de banderoles de décor comprenant un premier bloc de moule qui comporte au moins une chambre de thermoformage, des moyens pour faire basculer le premier bloc de moule entre une position de travail pour le thermoformage des récipients et une position basculée pour l'introduction d'une banderole dans la chambre de thermoformage par des moyens d'introduction, avant le thermoformage d'un récipient dans ladite chambre.

Un dispositif de ce type est déjà connu. Il met en oeuvre le procédé connu décrit précédemment et possède les inconvénients que l'on a mis en évidence ci-dessus.

L'invention se propose de remédier à ces inconvénients.

Dans ce but, le dispositif comprend en outre au moins un deuxième bloc de moule analogue au premier bloc de moule, des moyens pour faire basculer ledit au moins un deuxième bloc de moule entre une position de travail et une position basculée, des moyens pour mettre un des blocs de moule en position basculée pour l'introduction d'une banderole dans sa chambre de thermoformage par des moyens d'introduction avant le thermoformage d'un récipient dans ladite chambre, pendant que l'autre ou, le cas échéant, l'un des autres blocs de moule est en position de travail pour le thermoformage d'un récipient dans la chambre de thermoformage de ce bloc de moule.

Les moyens pour faire basculer les blocs de moule sont aptes à faire pivoter ensemble les blocs de moule autour d'un arbre de pivotement.

Selon un premier mode de réalisation correspondant au premier mode de mise en oeuvre du procédé selon l'invention, le dispositif selon l'invention comporte un unique deuxième bloc de moule et les premier et deuxième blocs de moule sont disposés orthogonalement l'un par rapport à l'autre.

Généralement, on fait pivoter un bloc de moule de 90° pour le déplacer entre sa position basculée et sa position de travail.

On comprend donc que, dès lors que les deux blocs de moule sont disposés orthogonalement l'un par rapport à l'autre, un pivotement de 90° permet le déplacement simultané de l'un des blocs de moule depuis sa position basculée vers sa position de travail, et de l'autre bloc de moule depuis sa position de travail vers sa position basculée.

Selon un deuxième mode de réalisation correspondant au deuxième mode de mise en oeuvre du procédé selon l'invention, le dispositif selon l'invention comporte une triade de deuxièmes blocs de moule et les blocs de moule sont disposés l'un à côté de l'autre de telle sorte que deux blocs de moule adjacents sont orthogonaux l'un par rapport à l'autre.

On comprend donc que le dispositif comprend quatre blocs de moule que l'on appelle premier, deuxième, troisième et quatrième blocs de moule par souci de commodité.

Dans ce deuxième mode de réalisation, les quatre blocs de moule sont de préférence montés sur un barillet rotatif.

Dans cas, le barillet rotatif fait pivoter ensemble les quatre blocs de moule et, de préférence, ce pivotement est toujours effectué dans un même sens.

On comprend que chacun des blocs de moule présente en outre une seconde position basculée, opposée à la position basculée pour l'introduction d'une banderole.

Le dispositif selon l'invention comprend en outre des moyens pour déplacer l'un des blocs de moule en position de travail entre une position de thermoformage dans laquelle on thermoforme un récipient dans une chambre de thermoformage de ce bloc de moule et une position d'évacuation dans laquelle on évacue le récipient venant d'être thermoformé et lesdits moyens permettent simultanément de déplacer l'autre ou les autres blocs de moule entre une position basculée à un premier niveau et une position basculée à un deuxième niveau.

De préférence, considéré selon une direction verticale, le premier niveau est disposé au dessus du deuxième niveau.

Avantageusement, les moyens pour déplacer un bloc de moule en position de travail entre une position de thermoformage et une position d'évacuation comportent une platine mobile par rapport aux moyens d'introduction.

Généralement, les moyens d'introduction n'accompagnent pas le déplacement entre les premier et deuxième niveaux d'un bloc de moule en position basculée.

De préférence, la platine est apte à se déplacer selon une direction verticale.

Selon le premier mode de réalisation, les blocs de moule font partie d'un ensemble de blocs de moule et les moyens d'introduction sont disposés de part et d'autre de cet ensemble.

De préférence, les moyens pour introduire une banderole comportent des premiers moyens d'introduction disposés d'un côté pour l'introduction dans un bloc de moule qui, en position basculée, vient de ce côté et des seconds moyens d'introduction disposés d'un autre côté pour l'introduction dans l'autre bloc de moule qui, en position basculée, vient de cet autre côté.

Selon le deuxième mode de réalisation, les blocs de moule font partie d'un ensemble de blocs de moule et les moyens d'introduction comportent un unique dispositif d'introduction disposé sur l'un des côtés de cet ensemble.

De manière préférentielle, l'ensemble de blocs de moule est constitué par le barillet rotatif sur lequel sont montés les quatre blocs de moule.

L'unique dispositif d'introduction est donc préférentiellement disposé sur l'un des côtés du barillet.

Il en résulte que lorsque l'un des blocs de moule est placé dans la seconde position basculée, celui-ci est très facilement accessible, par exemple pour y effectuer des opérations de maintenance.

Comme chacun des blocs de moule est apte à se trouver dans la seconde position, en fonction de l'orientation du barillet rotatif, on comprend que chacun des quatre blocs de moule est très facilement accessible.

Grâce à ce mode de réalisation de l'invention, on comprend qu'il n'est pas nécessaire de démonter les blocs d'introduction pour accéder aux blocs de moule et notamment y effectuer des opérations de maintenance.

L'invention sera mieux comprise et ses avantages apparaîtront mieux à la lecture de la description qui suit, d'un mode de réalisation indiqué à titre d'exemple non limitatif. La description se réfère aux dessins annexés sur lesquels :
- la figure **1** est une vue schématique d'une installation mettant en oeuvre le premier mode de réalisation du dispositif selon l'invention ;
- la figure **2** est une vue schématique du premier mode de réalisation du dispositif selon l'invention, représentant le premier bloc de moule en position d'évacuation et le deuxième bloc de moule en position basculée au deuxième niveau ;
- la figure **3** est une vue schématique du premier mode de réalisation du dispositif selon l'invention montrant le déplacement simultané du premier bloc de moule en position basculée et du deuxième bloc de moule en position de thermoformage ;
- la figure **4** est une vue schématique du premier mode de réalisation du dispositif selon l'invention dans laquelle le premier bloc de moule est en position basculée au premier niveau et le deuxième bloc de moule est en position de thermoformage ;
- la figure **5** est une vue schématique du premier mode de réalisation du dispositif selon l'invention montrant le déplacement simultané du premier bloc de moule en position basculée au deuxième niveau et du deuxième bloc de moule en position d'évacuation ;
- la figure **6** est une vue schématique du premier mode de réalisation du dispositif selon l'invention dans laquelle le premier bloc de moule est en position basculée au deuxième niveau, et le deuxième bloc de moule est en position d'évacuation ;
- la figure **7** est une vue schématique du premier mode de réalisation du dispositif selon l'invention montrant le déplacement simultané du premier bloc de moule en position de travail et du deuxième bloc de moule en position basculée ;
- la figure 8 est une vue schématique du premier mode de réalisation du dispositif selon l'invention dans laquelle le premier bloc de moule est en position de thermoformage tandis que le deuxième bloc de moule est en position basculée au premier niveau ;
- la figure **9** est une vue schématique du premier mode de réalisation du dispositif selon l'invention montrant le déplacement simultané du premier bloc en position d'évacuation et du deuxième bloc en position basculée au deuxième niveau ;
- la figure **10** est une vue schématique du premier mode de réalisation du dispositif selon l'invention dans laquelle le premier bloc de moule est en position d'évacuation tandis que le deuxième bloc de moule est en position basculée au deuxième niveau ;
- la figure **11** est une vue schématique du deuxième mode de réalisation du dispositif selon l'invention dans laquelle le premier bloc de moule est en position basculée au premier niveau tandis que le deuxième bloc de moule est en position de thermoformage ;
- la figure **12** est une vue schématique du deuxième mode de réalisation du dispositif selon l'invention montrant le déplacement simultané du premier bloc en position basculée au deuxième niveau et du deuxième bloc en position d'évacuation ;
- la figure **13** est une vue schématique du deuxième mode de réalisation du dispositif selon l'invention dans laquelle le premier bloc de moule est en position basculée au deuxième niveau tandis que le deuxième bloc de moule est en position d'évacuation ;
- la figure **14** est une vue schématique du deuxième mode de réalisation du dispositif selon l'invention montrant le déplacement simultané du premier bloc de moule en position de travail et du quatrième bloc de moule en position basculée au premier niveau; et
- la figure **15** est une vue schématique du deuxième mode de réalisation du dispositif selon l'invention dans lequel le premier bloc de moule est en position de travail juste avant le thermoformage et le quatrième bloc de moule est en position basculée au premier niveau juste avant l'introduction de banderoles.

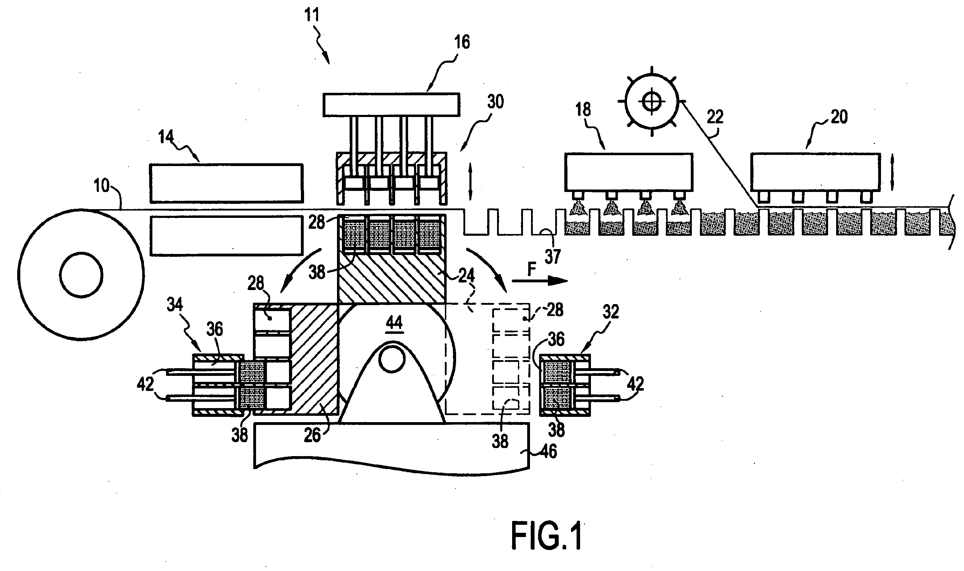

L'installation représentée sur la figure **1** met en oeuvre le procédé objet de l'invention dans son premier mode de mise en oeuvre. Elle comprend plusieurs stations au travers desquelles est entraînée pas à pas une bande **10** en matériau thermoplastique, par des moyens d'entraînement (non représentés ici). Considérée successivement dans le sens **F** d'avancement de la bande, l'installation comprend une station **14** de chauffage, une station **16** de thermoformage, une station **18** de remplissage des récipients **37** thermoformés et une station **20** de fermeture de ces récipients **37** par scellement, au travers de leurs ouvertures, d'une bande de fermeture **22.**

Bien entendu, l'invention s'applique également au thermoformage de récipients dans un matériau thermoplastique se présentant sous une autre forme que celle d'une bande continue, par exemple sous la forme de plaquettes ou jeton individuels à partir de chacun desquels un récipient ou un groupe de récipients sont thermoformés.

La station de thermoformage **16** comprend deux blocs de moule **24,26,** chacun des deux blocs de moule étant muni d'une pluralité de chambres de thermoformage **28.**

La station de thermoformage **16** comprend également un bloc de pistons **30** de thermoformage, déplaçables dans lesdites chambres de thermoformage **28,** ainsi que des moyens pour introduire des banderoles de décor dans les chambres de thermoformage comprenant deux blocs **32,34** de chambres d'introduction **36** de banderoles de décor **38** orientés de préférence dans la direction d'avancement de la bande.

De manière préférentielle, les pistons **30** de thermoformage sont aptes à se déplacer uniquement selon une direction sensiblement verticale.

Dans l'exemple représenté, le bloc de moule **24** (respectivement le bloc de moule **26)** est associé au bloc d'introduction **32** (respectivement au bloc d'introduction **34).** Des bandelettes de décor **40** sont amenées, par des moyens d'amenée jusqu'au voisinage des chambres d'introduction **36.** Des moyens non représentés ici permettent de découper des banderoles de décor **38** dans les bandelettes **40** et de les enrouler dans les chambres d'introduction **36.** Ces moyens sont par exemple analogues à ceux que décrit le brevet FR 2 793 185.

Ces banderoles de décor 38 présentent la forme d'un cylindre ouvert à ses extrémités.

Des moyens pour ajuster la position d'une banderole dans une chambre de thermoformage, prévus dans la demande de brevet français n° 03 09 217 non publiée à la date de priorité de la présente demande, peuvent équiper le présent dispositif.

Des tiges d'introduction **42** sont prévues pour transférer les banderoles de décor **38** enroulées depuis les chambres d'introduction **36** vers les chambres de thermoformage **28,** ce transfert étant effectué latéralement par rapport aux blocs de moule **24,26**

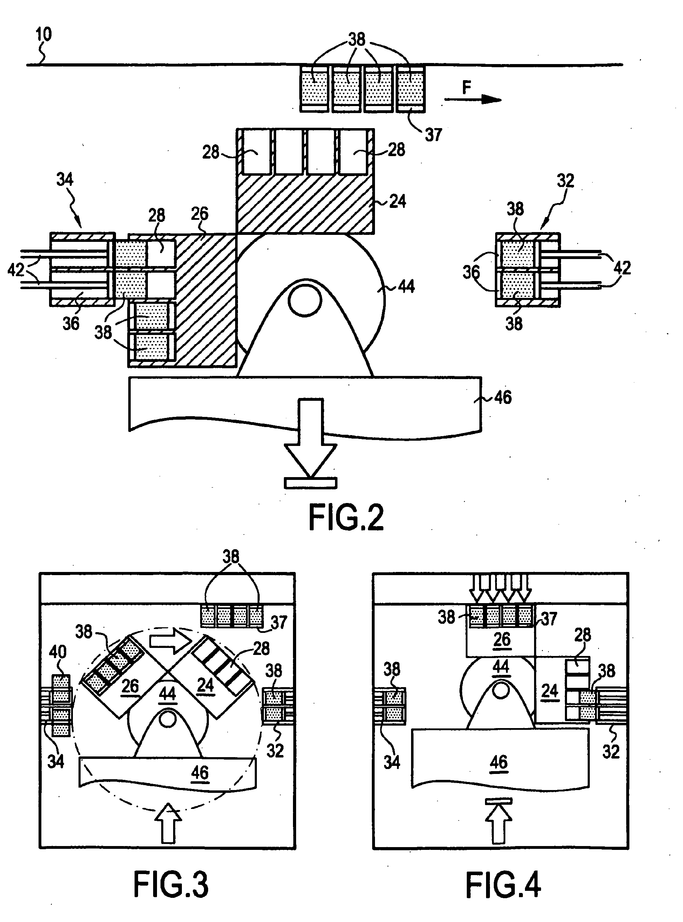

À l'aide de la figure **2****,** on va maintenant décrire plus en détail la structure du dispositif **11** selon l'invention dans son premier mode de réalisation.

Le dispositif **11** selon l'invention, destiné à la fabrication par thermoformage de récipients **37** munis de banderoles de décor **38,** comprend un premier bloc de moule portant la référence **24** et un deuxième bloc de moule portant la référence **26.** Chacun de ces deux blocs de moule **24,26** comporte une pluralité de chambres de thermoformage **28.**

En l'espèce, un bloc de moule **24** comporte quatre rangées de chambres de thermoformage **28** (par exemple six chambres de thermoformage par rangée), lesdites rangées s'étendant transversalement par rapport au sens d'avancement **F** de la bande thermoplastique **10.**

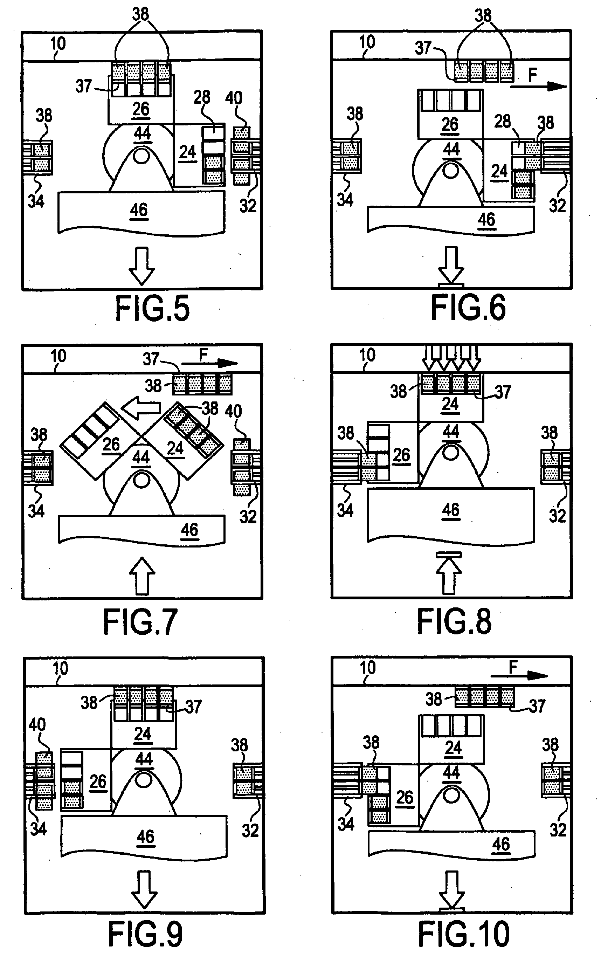

En se référant aux figures **4****,** **6** et **8**, on constate qu'un bloc de moule, par exemple le bloc de moule **26,** peut se trouver dans quatre positions différentes : une position de thermoformage (figure **4**) dans laquelle les récipients **37** sont thermoformés par l'action des pistons, une position d'évacuation (figure **6**) dans laquelle le bloc de moule a été déplacé vers le bas par rapport à sa position de thermoformage afin de libérer les récipients **37** qui viennent d'être thermoformés (démoulage), et une position basculée (figure **8**) dans laquelle le bloc de moule a été pivoté d'un quart de tour par rapport à sa position d'évacuation de telle manière que des banderoles puissent être introduites dans les chambres de thermoformage de ce bloc de moule. En outre, un bloc de moule en position basculée peut se trouver à deux niveaux différents (figures **4** et **6** pour le bloc de moule **26** et figures **8** et **10** pour le bloc de moule **24),** pour des raisons expliquées ci-après. Par souci de commodité, on dira qu'un bloc de moule est en position de travail lorsqu'il est en position de thermoformage ou d'évacuation.

Les chambres de thermoformage des blocs de moule sont orientées verticalement en position de travail tandis qu'elles sont orientées sensiblement horizontalement en position basculée.

Comme on le constate sur la figure **2****,** les deux blocs de moule sont fixés en périphérie d'un arbre de pivotement **44** cylindrique qui est disposé dans un plan horizontal et qui s'étend transversalement par rapport à la direction d'avancement de la bande thermoplastique **10.**

Le montage d'un bloc de moule **24** ou **26** sur l'arbre de pivotement **44** est réalisé de telle façon que ses chambres de thermoformage **28** s'étendent radialement par rapport à l'arbre de pivotement cylindrique **44**.

Le dispositif selon l'invention comporte des moyens pour faire basculer les premiers et deuxième bloc de moule entre une position de travail pour le thermoformage des récipients **37** et une position basculée pour introduction d'une banderole dans la chambre de thermoformage, avant le thermoformage des récipients **37** dans ladite chambre. En l'espèce, lesdits moyens comportent essentiellement l'arbre de pivotement **44** dont une rotation de 90° permet de faire basculer un bloc de moule entre les position de travail et basculée précédemment décrites.

De manière avantageuse, le dispositif selon l'invention comporte en outre des moyens pour mettre un des blocs de moule en position basculée pendant que l'autre bloc de moule est en position de travail. En l'espèce, lesdits moyens comprennent l'arbre de pivotement **44** et il est également prévu que les deux blocs de moule soient disposés orthogonalement l'un par rapport à l'autre.

Plus précisément, les deux blocs de moule sont fixés à l'arbre de pivotement **44** de telle manière que la direction dans laquelle s'étendent les chambres de thermoformage du premier bloc de moule et la direction dans laquelle s'étendent les chambres de thermoformage du deuxième bloc de moule sont orthogonales entre elles, et cela, quelle que soit la position angulaire de l'arbre de pivotement **44.**

Par exemple, en se référant à la figure **2****,** dans laquelle le premier bloc de moule **24** se trouve en position de travail et le deuxième bloc de moule se trouve en position basculée, on comprend qu'une rotation de 90° dans le sens des aiguilles d'une montre de l'arbre de pivotement **44** déplace simultanément le premier bloc de moule **24** en position basculée et le deuxième bloc de moule **26** en position de travail.

De la même manière, en se référant par exemple à la figure **6**, dans laquelle le premier bloc de moule **24** se trouve en position basculée et le deuxième bloc de moule **26** se trouve en position de travail, on comprend qu'une rotation de 90° dans le sens inverse des aiguilles d'une montre de l'arbre de pivotement **44** déplace simultanément le premier bloc de moule **24** en position de travail et le deuxième bloc de moule **26** en position basculée.

En outre, le dispositif **11** selon l'invention comporte des moyens **46** pour déplacer un bloc de moule en position de travail entre les positions de thermoformage et d'évacuation précédemment décrites. En l'espèce, lesdits moyens comportent une platine **46** mobile selon une direction verticale, entre une position haute dans laquelle ledit bloc de moule se trouve en position de thermoformage et une position basse dans laquelle ledit bloc de moule se trouve en position d'évacuation.

Comme on le constate sur la figure **2****,** l'arbre de pivotement **44** est monté en rotation sur la platine **46.**

En se référant aux figures **4** et **6** ou **8** et **10,** on constate qu'un bloc de moule en position basculée peut se trouver dans à deux niveaux différents en fonction de la position verticale de la platine **46.**

Lorsque la platine **46** est en position haute, comme cela est représenté sur les figures **4** et **8****,** on constate que le bloc de moule en position basculée se trouve à un premier niveau. De façon similaire, lorsque la platine **46** est en position basse, comme cela est représenté sur les figures **6** et **10****,** on constate que le bloc de moule en position basculée se trouve à un deuxième niveau.

Les blocs d'introduction **32,34** sont quant à eux disposés de part et d'autre de la platine **46** de telle sorte que leurs tiges d'introduction **42** s'étendent selon la direction d'avancement de la bande thermoplastique **10.** Par conséquent, pris dans le sens d'avancement **F** de la bande thermoplastique **10,** on distingue le bloc d'introduction amont **34** situé en amont de la platine **46** et le bloc d'introduction aval **32,** situé en aval de la platine **46.**

Grâce aux figures, on comprend que le premier bloc de moule **24** (respectivement le deuxième bloc de moule **26)** coopère avec le bloc d'introduction aval **32** (respectivement amont **34)** de la platine **46.**

De préférence, chaque bloc d'introduction **32,34** comporte deux rangées transversales de chambres d'introduction **36,** chacune de ces rangées comprenant six chambres d'introduction **36.**

De manière préférentielle, les blocs d'introduction **32,34** sont fixes par rapport à un bâti et les chambres de thermoformage **28** d'un bloc de moule **24,26** en position basculée sont déplaçables devant les chambres d'introduction **36,** de telle sorte que lorsqu'un bloc de moule **24,26** est en position basculée à un premier niveau, les chambres d'introduction **36** du bloc d'introduction associé se trouvent en regard des chambres de thermoformage **28** de deux rangées adjacentes dudit bloc de moule **24,26,** et lorsqu'un bloc de moule **24,26** est en position basculée à un deuxième niveau, les chambres d'introduction du bloc d'introduction **32,34** associé se trouvent en regard des chambres de thermoformage **28** des deux autres rangées adjacentes dudit bloc du moule **24,26.**

A l'aide des figures **2** à **10** et de la description détaillée du dispositif **11** qui précède, on va maintenant décrire le procédé selon l'invention dans son premier mode de mise en oeuvre

Les figures **2** à **10** représentent un cycle de fabrication durant lequel on thermoforme, selon le présent procédé, une série de récipients **37** dans chacun des deux blocs de moule **24,26.**

En partant de la situation représentée sur la figure **2****,** dans laquelle le premier bloc de moule **24** est en position d'évacuation, le deuxième bloc de moule **26** est en position basculée au deuxième niveau, chacune de ses chambres de thermoformage **28** contenant des banderoles de décor **38,** on va décrire le cycle de fabrication.

Dans cette situation, on a préalablement introduit des banderoles de décor **38** dans les chambres d'introduction **36** du bloc d'introduction aval **32.**

On fait pivoter l'arbre de pivotement **44** de 90° dans le sens des aiguilles d'une montre puis on déplace la platine **46** vers sa position haute de manière à d'une part amener le premier bloc de moule **24** en position basculée au premier niveau et d'autre part amener le deuxième bloc de moule **26** en position de thermoformage, comme cela est représenté sur la figure **3****.** Pendant ce temps, on enroule de nouvelles banderoles de décor **38** dans les chambres d'introduction **36** du bloc d'introduction amont **34.**

Dans cette position, représentée sur la figure **4****,** on introduit deux rangées de banderoles de décor **38** dans deux rangées associées de chambres de thermoformage **28** du premier bloc de moule **24,** à partir des chambres d'introduction du bloc d'introduction aval **32.**

Toujours dans cette position, on thermoforme une série de quatre rangées de récipients **37** dans les chambres de thermoformage du deuxième bloc de moule **26** qui se trouve en position de thermoformage.

Après le thermoformage de la série de récipients **37** dans le deuxième bloc de moule **26,** on déplace la platine **46** vers le bas de façon à, d'une part, amener le deuxième bloc de moule **26** en position d'évacuation pour évacuer cette série de récipients **37** et, d'autre part, amener le premier bloc de moule **24** en position basculée au deuxième niveau.

Pendant ce temps, comme on le voit sur la figure **5****,** on enroule de nouvelles banderoles de décor **38** dans les chambres d'introduction **36** du bloc d'introduction aval **32.**

Lorsque la platine se trouve en position basse, comme cela est représenté sur la figure **6****,** la bande thermoplastique **10** avance de façon à transférer vers la station de remplissage les récipients **37** qui viennent d'être thermoformés. Pendant ce temps, on introduit deux autres rangées de banderoles de décor **38** dans les deux autres rangées de chambres de thermoformage **28** du premier bloc de moule **24,** à partir des chambres d'introduction du bloc d'introduction aval **32.**

On comprend qu'à cet instant, chacune des chambres de thermoformage du premier bloc de moule **24** contient une banderole de décor **38.**

Ensuite, comme on le voit sur la figure **7****,** on fait pivoter l'arbre de pivotement **44** de 90° dans le sens inverse des aiguilles d'une montre puis on déplace la platine **46** vers sa position haute, de façon à amener le premier bloc de moule **24** en position de thermoformage et le deuxième bloc de moule **26** en position basculée au premier niveau.

Dans cette position, visible sur la figure **8****,** on thermoforme une série de quatre rangées de récipients **37** dans le premier bloc de moule **24** et, pendant ce temps, on introduit deux rangées de banderoles de décor **38** dans les deux rangées de chambres de thermoformage du deuxième bloc de moule **26.**

Ensuite, comme on le voit sur la figure **9****,** on déplace la platine **46** vers sa position basse de manière à, d'une part, amener le premier bloc de moule en position d'évacuation afin d'évacuer la série de récipients **37** venant d'être thermoformés, et d'autre part amener le deuxième bloc de moule **26** en position basculée au deuxième niveau. Pendant ce temps, on enroule de nouvelles banderoles **38** dans les chambres d'introduction **36** du bloc d'introduction amont **34.**

Lorsque la platine **46** se trouve en position basse, comme cela est représenté sur la figure **10****,** la bande thermoplastique **10** avance de façon à transférer vers la station **18** de remplissage les récipients **37** qui viennent d'être thermoformés. Pendant ce temps, on introduit deux autres rangées de banderoles de décor **38** dans les deux autres rangées de chambres de thermoformage du deuxième bloc de moule **26,** à partir du bloc d'introduction amont **34.**

On comprend qu'à cet instant, chacune des chambres de thermoformage **28** du deuxième bloc de moule **26** contient une banderole de décor **38,** en vue du thermoformage suivant.

On vient donc de décrire le cycle complet selon le procédé de l'invention dans son premier mode de mise en oeuvre, au cours duquel on a thermoformé une série de récipients **37** dans les chambres de thermoformage de chacun des deux blocs de moule **24,26.**

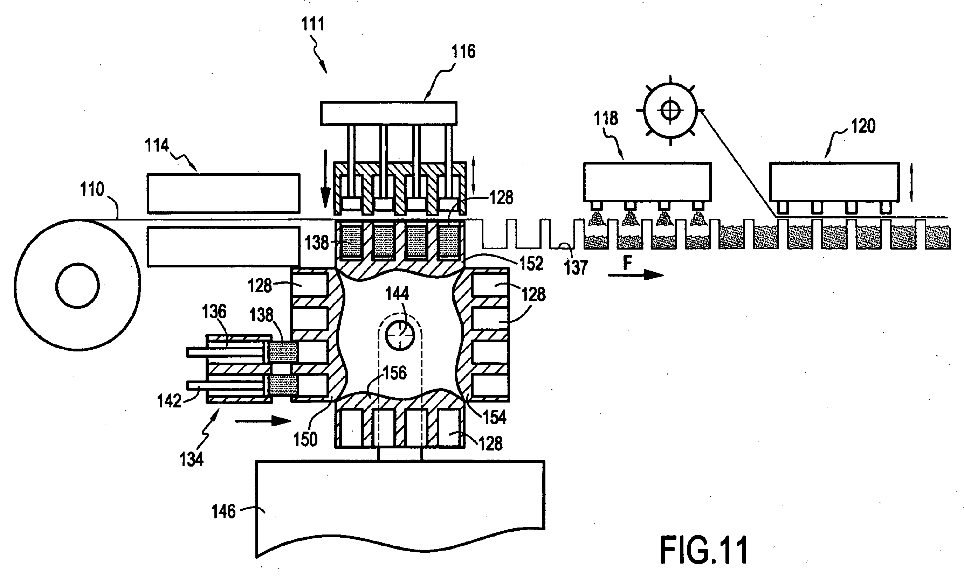

A l'aide des figures **11** à **15****,** on va décrire le deuxième mode de mise en oeuvre du procédé selon l'invention ensemble avec le deuxième mode de réalisation du dispositif selon l'invention.

Les éléments identiques au premier mode de réalisation du dispositif selon l'invention portent la même référence numérique augmentée de la valeur **100.**

On décrira ci-après les principales différences existant entre les premier et deuxième modes de mise en oeuvre et de réalisation.

Le dispositif **111** selon le deuxième mode de réalisation de l'invention comporte un ensemble de blocs de moule **149** comprenant un premier bloc de moule **150,** un deuxième bloc de moule **152,** un troisième bloc de moule **154** et un quatrième bloc de moule **156.**

Chacun de ces quatre blocs de moule présente une structure analogue à celle des premier et deuxième blocs de moule du premier mode de réalisation du dispositif selon l'invention.

Comme on le voit sur la figure **11****,** les quatre blocs de moule **150, 152, 154** et **156** sont montés sur un barillet rotatif **148** apte à pivoter autour d'un axe de pivotement **144,** analogue à celui du premier mode de réalisation du dispositif selon l'invention.

Cet axe de pivotement **144** est porté par une platine **146** analogue à la platine **46** du premier mode de réalisation du dispositif.

Les quatre blocs de moule **150, 152, 154, 156** sont disposés à la périphérie du barillet **148** de telle manière que deux blocs de moule adjacents sont orthogonaux entre eux. En l'espèce, le premier bloc de moule **150** est orthogonal aux deuxième **152** et quatrième **156** blocs de moule tandis que le deuxième bloc de moule **152** est orthogonal aux premier **150** et troisième **154** blocs de moule.

Dès lors, l'axe de pivotement **144** constitue un axe de symétrie pour l'ensemble de blocs de moule **149**.

En outre, le barillet **148** est prévu pour pivoter uniquement dans un sens, à savoir celui dans lequel un bloc de moule est améné de la position basculée au deuxième niveau vers la position de travail. Dans l'exemple représenté sur les figures, il s'agit du sens des aiguilles d'une montre. De préférence, le barillet **148** pivote lorsque la platine **146** est sensiblement en position basse afin de ne pas heurter l'extrémité inférieure de la presse de la station de thermoformage **116** lors du pivotement.

On comprend donc que lorsque l'on fait pivoter quatre fois le barillet d'un angle de 90° dans ce même sens, celui-ci retrouve sa position initiale.

Par ailleurs, les moyens d'introduction comportent un unique dispositif d'introduction **134** disposé sur l'un des côtés de cet ensemble de blocs de moule **149.**

Ce dispositif d'introduction est constitué d'un bloc d'introduction **134** similaire au bloc d'introduction amont **34** du premier mode de réalisation du dispositif selon l'invention.

On va maintenant décrire plus en détail le deuxième mode de réalisation du dispositif selon l'invention, en partant de la figure **11** dans laquelle le premier bloc de moule est en position basculée au premier niveau, le deuxième bloc de moule, dont les chambres de thermoformage contiennent des banderoles **138,** est en position de thermoformage, le troisième bloc de moule et le quatrième bloc de moule sont dans des position intermédiaires.

Dans cette position, on introduit latéralement deux rangées de banderoles de décor **138** dans deux rangées associées de chambres de thermoformage **128** du premier bloc de moule **150,** à partir des chambres d'introduction du bloc d'introduction **134.**

Toujours dans cette position, on thermoforme une série de quatre rangées de récipients **137** dans les chambres de thermoformage du deuxième bloc de moule **152** qui se trouve en position de thermoformage.

Après le thermoformage de la série de récipients **137** dans le deuxième bloc de moule **152,** on déplace la platine **146** vers le bas de façon à, d'une part, amener le deuxième bloc de moule **152** en position d'évacuation pour évacuer cette série de récipients **137** et, d'autre part, amener le premier bloc de moule **150** en position basculée au deuxième niveau.

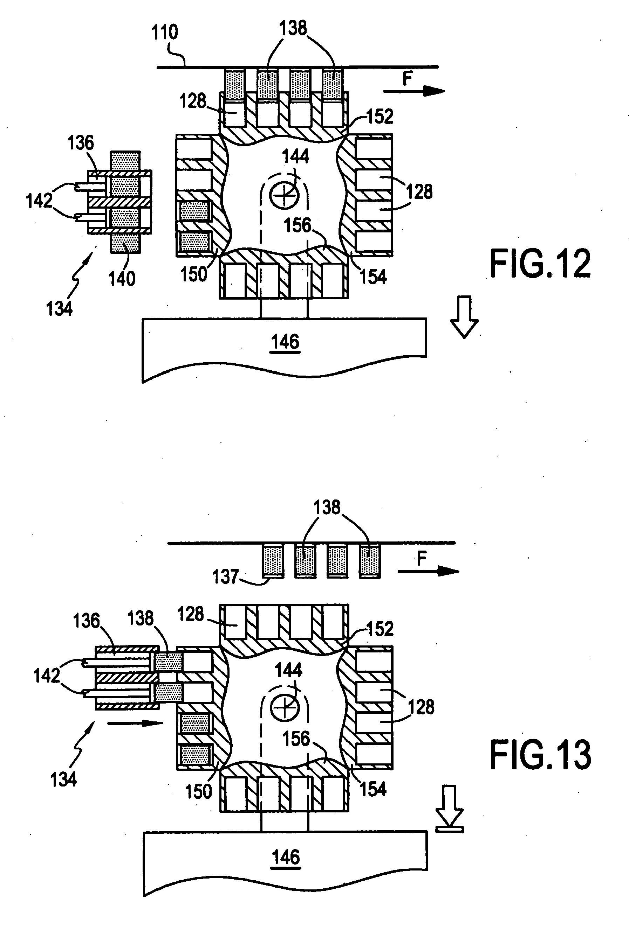

Pendant ce temps, comme on le voit sur la figure **12****,** on enroule de nouvelles banderoles de décor **138** dans les chambres d'introduction **136** du bloc d'introduction **134.**

Lorsque la platine **146** se trouve en position basse, comme cela est représenté sur la figure **13****,** la bande thermoplastique **110** avance de façon à transférer vers la station de remplissage les quatre rangées de récipients **137** qui viennent d'être thermoformés. Pendant ce temps, on introduit deux autres rangées de banderoles de décor **138** dans les deux autres rangées de chambres de thermoformage **128** du premier bloc de moule **24,** à partir des chambres d'introduction du bloc d'introduction **134.**

On comprend qu'à cet instant, chacune des chambres de thermoformage du premier bloc de moule **150** contient une banderole de décor **138.**

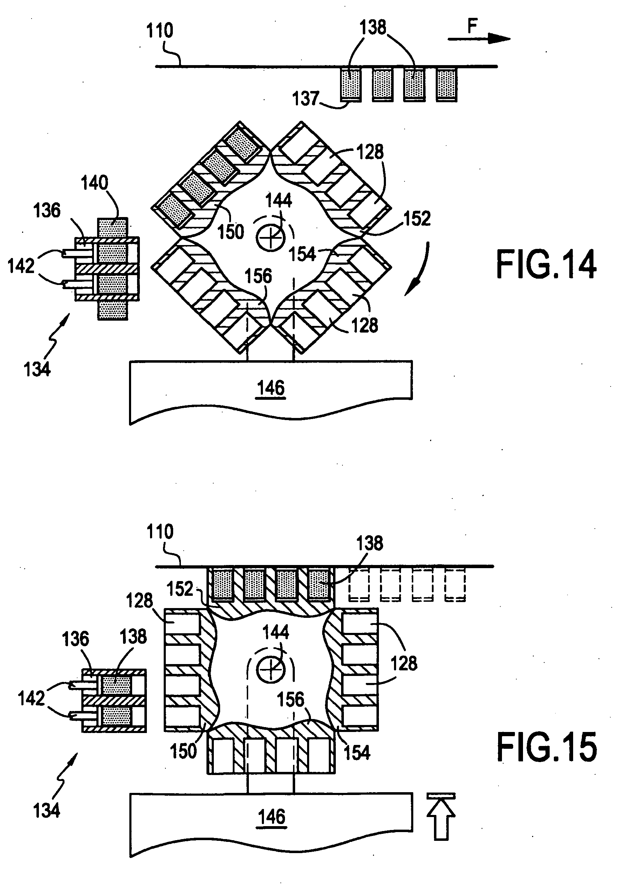

Ensuite, comme on le voit sur la figure **14****,** on fait pivoter le barillet **158** de 90° dans le sens des aiguilles d'une montre puis on déplace la platine **146** vers sa position haute, de façon à amener le premier bloc de moule **150** en position de thermoformage et le quatrième bloc de moule **156** en position basculée au premier niveau.

Dans cette position, visible sur la figure **15****,** on thermoforme une série de quatre rangées de récipients **137** dans le premier bloc de moule **150** et, pendant ce temps, on introduit deux rangées de banderoles de décor **138** dans les deux rangées de chambres de thermoformage du quatrième bloc de moule **156.**

Les opérations figurant dans le schéma de la figure **15** sont donc les mêmes que celles de la figure **11****,** à ceci près que le barillet rotatif a pivoté de 90° dans le sens des aiguilles d'une montre.

Après le thermoformage de la série de récipients **137** dans le premier bloc de moule **150,** on comprend que l'on va répéter les étapes décrites ci-dessus afin de thermoformer des séries de récipients **137** successivement dans les quatrième **156,** troisième **154** puis, à nouveau, deuxième **152** blocs de moule.

On vient donc de décrire le cycle complet selon le procédé de l'invention dans son deuxième mode de mise en oeuvre, au cours duquel on a thermoformé une série de récipients **137** dans les chambres de thermoformage de chacun des quatre blocs de moule **150**, **152, 154** et **156.**

Ainsi, l'invention permet avantageusement d'introduire quatre rangées de banderoles de décor **138** dans les chambres de thermoformage **128** de chacun des blocs de moule **150,152,154** et **156,** à l'aide de deux rangées de chambres d'introduction, cette introduction se faisant latéralement à partir d'un seul côté du barillet rotatif **149.**

L'unique bloc d'introduction **134** est disposé d'un unique côté du barillet rotatif **148,** si bien qu'il est aisé d'accéder à l'autre côté du barillet et notamment au bloc de moule qui est placé dans la seconde position basculée.

On comprend qu'il est ainsi avantageusement possible, par exemple pour des opérations de maintenance, de démonter le barillet rotatif **149** ou bien simplement d'accéder au bloc de moule placé dans la seconde position basculée, sans avoir à démonter le bloc d'introduction **134.**

Comme chacun des blocs de moule est apte à atteindre cette seconde position basculée, on comprend que chacun des blocs de moule **150, 152, 154, 156** est successivement aisément accessible.

## Revendications

1. Procédé de fabrication de récipients par thermoformage et de mise en place de banderoles de décor sur ces récipients, dans lequel on fournit un premier bloc de moule **(24),** qui comporte au moins une chambre de thermoformage **(28)** et qui est apte à basculer entre une position de travail pour le thermoformage des récipients et une position basculée pour l'introduction d'une banderole de décor **(38)** dans la chambre de thermoformage **(28),** avant le thermoformage d'un récipient **(37)** dans ladite chambre, on fournit au moins un deuxième bloc de moule **(26)** analogue au premier bloc de moule **(24),** et pendant que l'un desdits blocs de moule est en position de travail pour le thermoformage d'un récipient **(37)** dans la chambre de thermoformage **(28)** de ce bloc de moule, l'autre ou, le cas échéant, l'un des autres blocs de moule est en position basculée pour l'introduction d'une banderole de décor **(38)** dans sa chambre de thermoformage **(28)** avant le thermoformage d'un autre récipient **(37)** dans ladite chambre **(28),** le procédé étant **caractérisé en ce que** dans sa position de travail, chaque bloc de moule est apte à occuper une position de thermoformage dans laquelle on thermoforme un récipient **(37)** dans une chambre de thermoformage **(28)** de ce bloc de moule et une position d'évacuation dans laquelle on évacue un récipient **(37)** venant d'être thermoformé et **en ce que** l'on introduit une première banderole de décor **(38)** dans une première chambre de thermoformage **(28)** d'un bloc moule en position basculée alors que l'autre ou l'un des autres blocs de moule est en position de thermoformage et on introduit une autre banderole de décor **(38)** dans une autre chambre du bloc de moule en position basculée alors que l'autre ou l'un des autres blocs de moule est en position d'évacuation.

2. Procédé selon la revendication **1, caractérisé en ce que** l'on amène simultanément l'un des blocs de moule **(24,26)** en position de travail et l'autre ou l'un des autres blocs de moule **(24,26)** en position basculée.

3. Procédé selon la revendication **1** ou **2, caractérisé en ce que** l'on introduit une banderole de décor **(38)** dans une chambre de thermoformage **(28)** de l'un des blocs de moule en position basculée pendant le thermoformage d'un récipient **(37)** dans la chambre de thermoformage **(28)** de l'autre ou de l'un des autres blocs de moule en position de travail.

4. Procédé selon l'une quelconque des revendications **1** à **3, caractérisé en ce qu'**après le thermoformage d'un récipient **(37)** dans une chambre de thermoformage **(28)** de l'un des blocs de moule en position de travail, on évacue ledit récipient **(37)** et **en ce que** l'on introduit une banderole de décor **(38)** dans une chambre de thermoformage **(28)** de l'autre ou de l'un des autres blocs de moule en position basculée au moment de l'évacuation dudit récipient **(37)** thermoformé.

5. Procédé selon l'une quelconque des revendications **1 à 4, caractérisé en ce qu'**en déplaçant l'un des blocs de moule **(24,26)** en position de travail entre sa position de thermoformage et sa position d'évacuation, on déplace simultanément l'autre ou l'un des autres blocs de moule **(24,26)** entre une position basculée à un premier niveau et une position basculée à un deuxième niveau.

6. Procédé selon la revendication **5**, **caractérisé en ce que** l'on introduit au moins une série de banderoles de décor dans l'un des blocs de moule **(24,26)** en position basculée au premier niveau alors que l'autre ou l'un des autres blocs de moule **(24,26)** est en position de thermoformage et on introduit au moins une série de banderoles de décor dans le bloc de moule en position basculée au deuxième niveau alors que l'autre ou l'un des autres blocs de moule est en position d'évacuation.

7. Procédé selon l'une quelconque des revendications **1** à **6, caractérisé en ce que** l'on fournit un unique deuxième bloc de moule et **en ce qu'**on bascule l'un des blocs de moule dans un premier sens et l'autre bloc de moule dans l'autre sens, de telle manière qu'en position basculée, l'introduction de banderoles de décor dans l'un des blocs de moule se fait à partir d'un premier côté et l'introduction de banderoles de décor dans l'autre bloc de moule se fait à partir du côté opposé au premier côté.

8. Procédé selon l'une quelconque des revendications **1** à **6, caractérisé en ce que** l'on fournit une triade de deuxièmes blocs de moules et **en ce qu'**on bascule les blocs de moule dans un même sens, de telle sorte qu'en position basculée, l'introduction de banderoles de décor se fait à partir d'un unique côté.

9. Dispositif pour fabriquer par thermoformage des récipients munis de banderoles de décor, comprenant un premier bloc de moule **(24)** qui comporte au moins une chambre de thermoformage **(28),** des moyens pour faire basculer le premier bloc de moule **(24)** entre une position de travail pour le thermoformage des récipients et une position basculée pour l'introduction d'une banderole dans la chambre de thermoformage **(28)** par des moyens d'introduction **(32,42),** avant le thermoformage d'un récipient **(37)** dans ladite chambre, le dispositif comprenant en outre au moins un deuxième bloc de moule **(26)** analogue au premier bloc de moule **(24),** des moyens pour faire basculer ledit au moins un deuxième bloc de moule **(26)** entre une position de travail et une position basculée, des moyens pour mettre un des blocs de moule en position basculée pour l'introduction d'une banderole **(38)** dans sa chambre de thermoformage **(28)** par des moyens d'introduction **(34,42)** avant le thermoformage d'un récipient **(37)** dans ladite chambre, pendant que l'autre ou, le cas échéant, l'un des autres blocs de moule est en position de travail pour le thermoformage d'un récipient **(37)** dans la chambre de thermoformage (**28**) de ce bloc de moule, le dispositif étant **caractérisé en ce qu'**il comprend en outre des moyens pour déplacer l'un des blocs de moule (**24,26**) en position de travail entre une position de thermoformage dans laquelle on thermoforme un récipient **(37)** dans une chambre de thermoformage **(28)** de ce bloc de moule et une position d'évacuation dans laquelle on évacue le récipient **(37)** venant d'être thermoformé et **en ce que** lesdits moyens permettent simultanément de déplacer l'autre ou les autres blocs de moule entre une position basculée à un premier niveau et une position basculée à un deuxième niveau.

10. Dispositif selon la revendication **9, caractérisé en ce que** les moyens pour faire basculer les blocs de moule sont aptes à faire pivoter ensemble les blocs de moule autour d'un arbre de pivotement **(44).**

11. Dispositif selon la revendication **9** ou **10, caractérisé en ce que** le dispositif comporte un unique deuxième bloc de moule et **en ce que** les premier et deuxième blocs de moule sont disposés orthogonalement l'un par rapport à l'autre.

12. Dispositif selon la revendication **9** ou **10, caractérisé en ce qu'**il comporte une triade de deuxièmes blocs de moule et **en ce que** les blocs de moule sont disposés l'un à côté de l'autre de telle sorte que deux blocs de moule adjacents sont orthogonaux l'un par rapport à l'autre.

13. Dispositif selon la revendication **12, caractérisé en ce que** les blocs de moule sont montés sur un barillet rotatif.

14. Dispositif selon l'une quelconque des revendications **9** à **13, caractérisé en ce que** lesdits moyens comportent une platine (46) mobile par rapport aux moyens **(32,34)** d'introduction.

15. Dispositif selon l'une quelconque des revendications **9** à **14, caractérisé en ce que** les blocs de moules font partie d'un ensemble de blocs de moule et **en ce que** les moyens **(32,34)** d'introduction sont disposés de part et d'autre de cet ensemble.

16. Dispositif selon l'une quelconque des revendications **9** à **14, caractérisé en ce que** les blocs de moules font partie d'un ensemble de blocs de moule et **en ce que** les moyens **(32,34)** d'introduction comportent un unique dispositif d'introduction disposé sur l'un des côtés de cet ensemble.

## Claims

1. A method for manufacturing containers by thermoforming and for placing decorative banderols on these containers, in which a first mould block (24) is provided, which includes at least one thermoforming chamber (28) and which is capable of tilting between a working position for the thermoforming of containers and a tilted position for the introduction of a decorative banderol (38) into the thermoforming chamber (28) before the thermoforming of a container (37) in said chamber, at least one second mould block (26) is provided, analogous to the first mould block (24) and while one of said mould blocks is in the working position for the thermoforming of a container (37) in the thermoforming chamber (28) of this mould block, the other mould block or, as applicable, one of the other blocks is in the tilted position for the introduction of a decorative banderol (38) into its thermoforming chamber (28) before the thermoforming of another container (37) in the said chamber (28), the method being **characterised in that** in its working position, each mould block is capable of occupying a thermoforming position in which a container (37) is thermoformed in a thermoforming chamber (28) from this mould block and a discharging position in which a container (37) which has just been thermoformed is discharged and **in that** a first decorative banderol (38) is introduced into a first thermoforming chamber (28) in a mould block in the tilted position while the other or one of the other mould blocks is in the thermoforming position and another decorative banderol (38) is introduced into another chamber of the mould block in the tilted position while the other or one of the other mould blocks is in the discharge position.

2. The method according to claim 1, **characterised in that** simultaneously one of the mould blocks (24, 26) is brought into the working position and the other or one of the other mould blocks (24, 26) is brought into the tilted position.

3. The method according to claim 1 or 2, **characterised in that** a decorative banderol (38) is introduced into a thermoforming chamber (28) of one of the mould blocks in the tilted position during the thermoforming of a container (37) in the thermoforming chamber (28) of the other or of one of the other mould blocks in the working position.

4. The method according to any one of claims 1 to 3, **characterised in that,** after the thermoforming of a container (37) in a thermoforming chamber (28) of one of the mould blocks in the working position, the said container (37) is discharged and **in that** a decorative banderol (38) is introduced into a thermoforming chamber (28) of the other or of one of the other mould blocks in the tilted position at the moment of discharging said thermoformed container (37).

5. The method according to any one of claims 1 to 4, **characterised in that,** by moving one of the mould blocks (24, 26) into the working position between its thermoforming position and its discharge position, the other or one of the other mould blocks (24, 26) is moved simultaneously between a tilted position at a first level and a tilted position at a second level.

6. The method according to claim 5, **characterised in that** at least one series of decorative banderols is introduced into one of the mould blocks (24, 26) in the tilted position at the first level, while the other or one of the other mould blocks (24, 26) is in the thermoforming position, and at least one series of decorative banderols is introduced into the mould block in the tilted position at the second level, while the other or one of the other mould blocks is in the discharge position.

7. The method according to any one of claims 1 to 6, **characterised in that** a single second mould box is provided and **in that** one of the mould blocks is tilted in a first direction and the other mould block is tilted in the other direction, in such a way that, in the tilted position, the introduction of decorative banderols into one of the mould blocks is accomplished from a first side and the introduction of decorative banderols into the other mould block is accomplished from the side opposed to the first side.

8. The method according to any one of claims 1 to 6, **characterised in that** a triad of second mould blocks is provided and **in that** the mould blocks are tilted in the same direction, in such a way that, in the tilted position, the introduction of decorative banderols is accomplished from one single side.

9. A device for the manufacture by thermoforming of containers provided with decorative banderols, comprising a first mould block (24), which includes at least one thermoforming chamber (28), means for tilting the first mould block (24) between a working position for thermoforming containers and a tilted position for the introduction of a banderol into the thermoforming chamber (28) by introduction means (32, 42) before the thermoforming of a container (37) in said chamber, the device further comprising at least one second mould block (26) analogous to the first mould block (24), means for tilting said at least one second mould block (26) between a working position and a tilted position, means for putting one of the mould blocks into a tilted position for the introduction of a banderol (38) into its thermoforming chamber (28) by introduction means (34, 42) before the thermoforming of a container (37) in said chamber while the other or, as applicable, one of the other mould blocks is in the working position for the thermoforming of a container (37) in the thermoforming chamber (28) of this mould block, the device being **characterised in that,** it further comprises means for moving one of the mould blocks (24, 26) into the working position between a thermoforming position in which a container (37) is thermoformed in a thermoforming chamber (28) of this mould block and a discharge position in which the container (37) which has just been thermoformed is discharged and **in that** said means allow the other mould block or the other mould blocks to be moved simultaneously between a tilted position at a first level and a tilted position at a second level.

10. The device according to claim 9, **characterised in that** the means for tilting the mould blocks are capable of causing the mould blocks to pivot together about a pivot shaft (44).

11. The device according to claim 9 or 10, **characterised in that** the device includes one single second mould block and **in that** the first and second mould blocks are positioned orthogonally relatively to each another.

12. The device according to claim 9 or 10, **characterised in that** it includes a triad of second mould blocks and **in that** the mould blocks are positioned next to one another in such a way that two adjacent mould blocks are orthogonal relatively to each other.

13. The device according to claim 12, **characterised in that** the mould blocks are mounted on a rotating barrel.

14. The device according to any one of claims 9 to 13, **characterised in that** said means include a plate (46) which is movable relatively to the introduction means (32, 34).

15. The device according to any one of claims 9 to 14, **characterised in that** the mould blocks form part of an assembly of mould blocks and **in that** the introduction means (32, 34) are positioned on either side of this assembly.

16. The device according to any one of claims 9 to 14, **characterised in that** the mould blocks form part of an assembly of mould blocks and **in that** the introduction means (32, 34) include one single introduction device positioned on one of the sides of this assembly.

## Patentansprüche

1. Verfahren zur Herstellung von Behältern durch Warmformen und zum Anbringen von Zierstreifen an diesen Behältern, wobei ein erster Formblock (24) bereitgestellt wird, der wenigstens eine Warmformkammer (28) aufweist und der geeignet ist, zwischen einer Arbeitsstellung für das Warmformen der Behälter und einer gekippten Stellung für das Einführen eines Zierstreifens (38) in die Warmformkammer (28) vor dem Warmformen eines Behälters (37) in der Kammer zu schwenken, wenigstens ein zu dem ersten Formblock (24) analoger zweiter Formblock (26) bereitgestellt wird, und während der eine der Formblöcke sich in der Arbeitsstellung für das Warmformen eines Behälters (37) in der Warmformkammer (28) dieses Formblocks befindet, befindet sich der andere oder gegebenenfalls einer der anderen Formblöcke in der gekippten Stellung für das Einführen eines Zierstreifens (38) in seine Warmformkammer (28) vor dem Warmformen eines weiteren Behälters (37) in der Kammer (28), wobei das Verfahren **dadurch gekennzeichnet ist, daß** jeder Formblock in seiner Arbeitsstellung geeignet ist, eine Warmformstellung einzunehmen, in der ein Behälter (37) in einer Warmformkammer (28) dieses Formblocks warmgeformt wird, sowie eine Austragstellung, in der ein soeben warmgeformter Behälter (37) ausgetragen wird, und daß ein erster Zierstreifen (38) in eine erste Warmformkammer (28) eines in gekippter Stellung befindlichen Formblocks eingeführt wird, während sich der andere oder einer der anderen Formblöcke in der Warmformstellung befindet, und ein weiterer Zierstreifen (38) in eine andere Kammer des in gekippter Stellung befindlichen Formblocks eingeführt wird, während sich der andere oder einer der anderen Formblöcke in der Austragstellung befindet.

2. Verfahren nach Anspruch 1, **dadurch gekennzeichnet, daß** gleichzeitig einer der Formblöcke (24, 26) in die Arbeitsstellung und der andere oder einer der anderen Formblöcke (24, 26) in die gekippte Stellung gebracht werden.

3. Verfahren nach Anspruch 1 oder 2, **dadurch gekennzeichnet, daß** ein Zierstreifen (38) in eine Warmformkammer (28) von einem der Formblöcke in gekippter Stellung während des Warmformens eines Behälters (37) in der Warmformkammer (28) des anderen oder von einem der anderen Formblöcke in Arbeitsstellung eingeführt wird.

4. Verfahren nach einem der Ansprüche 1 bis 3, **dadurch gekennzeichnet, daß** nach dem Warmformen eines Behälters (37) in einer Warmformkammer (28) von einem der Formblöcke in Arbeitsstellung der genannte Behälter (37) ausgetragen wird, und daß ein Zierstreifen (38) zum Zeitpunkt des Austragens des warmgeformten Behälters (37) in eine Warmformkammer (28) des anderen oder von einem der anderen Formblöcke in gekippter Stellung eingeführt wird.

5. Verfahren nach einem der Ansprüche 1 bis 4, **dadurch gekennzeichnet, daß** durch Bewegen von einem der Formblöcke (24, 26) in Arbeitsstellung zwischen seiner Warmformstellung und seiner Austragstellung, gleichzeitig der andere oder einer der anderen Formblöcke (24, 26) zwischen einer auf eine erste Ebene gekippten Stellung und einer auf eine zweite Ebene gekippten Stellung bewegt wird.

6. Verfahren nach Anspruch 5, **dadurch gekennzeichnet, daß** wenigstens eine Reihe von Zierstreifen in einen der Formblöcke (24, 26) eingeführt wird, der sich in der auf die erste Ebene gekippten Stellung befindet, während der andere oder einer der anderen Formblöcke (24, 26) sich in der Warmformstellung befindet, und wenigstens eine Reihe von Zierstreifen in den Formblock eingeführt wird, der sich in der auf die zweite Ebene gekippten Stellung befindet, während sich der andere oder einer der anderen Formblöcke in der Austragstellung befindet.

7. Verfahren nach einem der Ansprüche 1 bis 6, **dadurch gekennzeichnet, daß** ein einziger zweiter Formblock bereitgestellt wird und daß einer der Formblöcke in eine erste Richtung und der andere Formblock in die andere Richtung gekippt wird, derart, daß in der gekippten Stellung das Einführen von Zierstreifen in einen der Formblöcke von einer ersten Seite aus erfolgt und das Einführen von Zierstreifen in den anderen Formblock von der der ersten Seite gegenüberliegenden Seite aus erfolgt.

8. Verfahren nach einem der Ansprüche 1 bis 6, **dadurch gekennzeichnet, daß** eine Dreiergruppe aus zweiten Formblöcken bereitgestellt wird und daß die Formblöcke in eine gleiche Richtung gekippt werden, so daß in der gekippten Stellung das Einführen von Zierstreifen von einer einzigen Seite aus erfolgt.

9. Vorrichtung für die Herstellung von mit Zierstreifen versehenen Behältern durch Warmformen, umfassend einen ersten Formblock (24), der wenigstens eine Warmformkammer (28) aufweist, Mittel zum Schwenken des ersten Formblocks (24) zwischen einer Arbeitsstellung für das Warmformen der Behälter und einer gekippten Stellung für das Einführen eines Streifens in die Warmformkammer (28) durch Einführmittel (32, 42) vor dem Warmformen eines Behälters (37) in der Kammer, wobei die Vorrichtung ferner folgendes umfaßt, nämlich wenigstens einen zu dem ersten Formblock (24) analogen zweiten Formblock (26), Mittel zum Schwenken des wenigstens einen zweiten Formblocks (26) zwischen einer Arbeitsstellung und einer gekippten Stellung, Mittel, um einen der Formblöcke für das Einführen eines Streifens (38) in seine Warmformkammer (28) durch Einführmittel (34, 42) vor dem Warmformen eines Behälters (37) in der Kammer in die gekippte Stellung zu bringen, während der andere oder gegebenenfalls einer der anderen Formblöcke sich in der Arbeitsstellung für das Warmformen eines Behälters (37) in der Warmformkammer (28) dieses Formblocks befindet, wobei die Vorrichtung **dadurch gekennzeichnet ist, daß** sie ferner Mittel aufweist, um einen der Formblöcke (24, 26) in Arbeitsstellung zwischen einer Warmformstellung, in der ein Behälter (37) in einer Warmformkammer (28) dieses Formblocks warmgeformt wird, und einer Austragstellung, in welcher der soeben warmgeformte Behälter (37) ausgetragen wird, zu bewegen, und daß die Mittel gleichzeitig ermöglichen, den oder die anderen Formblöcke zwischen einer auf eine erste Ebene gekippten Stellung und einer auf eine zweite Ebene gekippten Stellung zu bewegen.

10. Vorrichtung nach Anspruch 9, **dadurch gekennzeichnet, daß** die Mittel zum Schwenken der Formblöcke geeignet sind, die Formblöcke gemeinsam um eine Schwenkachse (44) zu verschwenken.

11. Vorrichtung nach Anspruch 9 oder 10, **dadurch gekennzeichnet, daß** die Vorrichtung einen einzigen zweiten Formblock aufweist und daß der erste und der zweite Formblock orthogonal zueinander angeordnet sind.

12. Vorrichtung nach Anspruch 9 oder 10, **dadurch gekennzeichnet, daß** sie eine Dreiergruppe aus zweiten Formblöcken umfaßt und daß die Formblöcke derart nebeneinander angeordnet sind, daß zwei benachbarte Formblöcke orthogonal zueinander sind.

13. Vorrichtung nach Anspruch 12, **dadurch gekennzeichnet, daß** die Formblöcke auf einer drehbaren Trommel angebracht sind.

14. Vorrichtung nach einem der Ansprüche 9 bis 13, **dadurch gekennzeichnet, daß** die Mittel eine gegenüber den Einführmitteln (32, 34) bewegliche Platte (46) umfassen.

15. Vorrichtung nach einem der Ansprüche 9 bis 14, **dadurch gekennzeichnet, daß** die Formblöcke zu einer Einheit von Formblöcken gehören und daß die Einführmittel (32, 34) auf beiden Seiten dieser Einheit angeordnet sind.

16. Vorrichtung nach einem der Ansprüche 9 bis 14, **dadurch gekennzeichnet, daß** die Formblöcke zu einer Einheit von Formblöcken gehören und daß die Einführmittel (32, 34) eine einzige Einführvorrichtung umfassen, die auf einer der Seiten dieser Einheit angeordnet ist.
